# EUROPEAN PATENT SPECIFICATION

(11) **EP 3 139 601 B1**
(45) Date of publication and mention of the grant of the patent: **22.12.2021**
(21) Application number: 15183594.9
(22) Date of filing: 02.09.2015
(51) Int. Cl.: H04N 9/31, G09G 3/00, F21V 33/00, G06F 3/14

(54) **ELECTRONIC DEVICE, METHOD AND COMPUTER PROGRAM FOR PROVIDING A SIGNAL TO AT LEAST ONE PROJECTOR**
ELEKTRONISCHE VORRICHTUNG, VERFAHREN UND COMPUTERPROGRAMM ZUR BEREITSTELLUNG EINES SIGNALS AN MINDESTENS EINEN PROJEKTOR
DISPOSITIF ÉLECTRONIQUE, PROCÉDÉ ET PROGRAMME D'ORDINATEUR POUR FOURNIR UN SIGNAL À AU MOINS UN PROJECTEUR

(43) Date of publication of application: 08.03.2017
(73) Proprietor: TOP Victory Investments Limited, Kowloon, Hong Kong 999077 (CN)
(72) Inventor: Kwisthout, Cornelis Wilhelmus, 9052 Ghent (BE)
(74) Representative: DREISS Patentanwälte PartG mbB

(56) References cited:
- WO-A1-2007/107930
- DE-U1-202005 008 776
- US-A1- 2005 271 299
- US-A1- 2007 171 380
- US-A1- 2007 291 047
- US-A1- 2009 066 726
- BRETT R JONES ET AL: "IllumiRoom", HUMAN FACTORS IN COMPUTING SYSTEMS, ACM, 2 PENN PLAZA, SUITE 701 NEW YORK NY 10121-0701 USA, 27 April 2013 (2013-04-27), pages 869-878, XP058043019, DOI: 10.1145/2470654.2466112 ISBN: 978-1-4503-1899-0

## Description

### Field of the invention

The invention relates to an electronic device for providing a signal to at least one projector.

The invention further relates to a method of providing a signal to at least one projector.

The invention also relates to a computer program product enabling a programmable device to perform a method of providing a signal to at least one projector.

### Background of the invention

WO2007/107930 discloses a display device which includes multiple projection devices that produce a coordinated (ambient) image on a display surface (e.g. a wall) that is derived from image content displayed on the display of the display device. This produces high resolution ambient lighting effects. WO2007/107930 does not disclose how the coordinated image is derived from image content displayed on the display of the display device.

US2007291047 discloses a method including: determining a first blend map for a first projector, the first blend map including a first plurality of attenuation factors corresponding to a region of overlap between first and second images projected by the first projector and a second projector, respectively, on a display surface, applying the first blend map to a white level measurement map that includes a plurality of white level measurement values measured from a first plurality of captured images, applying a smoothing function to the white level measurement map to generate a white level target map, and determining a scale map for the first projector from the white level measurement map and the white level target map.

US2007171380 discloses a projector system including an image generator and at least one projector for receiving an image from the image generator and projecting the image onto a screen to provide a final projected image. A computer generates correction data based on a calibration process that includes comparing an uncorrected image projected by the at least one projectors with a geometrically correct image. Wherein the at least one projector maps incoming pixel locations from the image generator to corrected pixel locations in the final projected image based on the correction data.

US2005271299 discloses an image transforming device wherein one input image or a plurality of input images captured or created under different condition are geometrically transformed to create an output image, including: an input geometrical profile calculating section to calculate an input geometrical profile directing to a coordinate relation between pixel positions of the input image and polar coordinate positions of the input image in view of a given observing position; an output geometrical profile calculating section to calculate an output geometrical profile directing to a coordinate relation between pixel positions of the output image and polar coordinate positions of the output image in view of the observing position; and geometrical transforming section to geometrically transform the input image on the input geometrical profile and the output geometrical profile, thereby calculating the output image.

US2009066726 discloses a composite image-generating device which includes: a geometric transformation table that assigns coordinates corresponding to positions of pixels of an output image on an input image received from a capturing section; and an output image-generating section that generates the output image by superimposing an overlay image based on overlay data associated with the positions of the pixels of the output image in the geometric transformation table on an image obtained by geometrically transforming the input image according to the geometric transformation table.

DE202005008776 discloses a television receiver or PC-image screen fitted, additionally to the main screen, with at least one small color image-screen conceived as a back-ground illumination image-screen which is directed backwards and which illuminates the background-surface/wall surface behind the image screen/TV receiver, coupled with a light-color-generator or with a signal-source of the main image screen.

BRETT R JONES ET AL, "IllumiRoom", HUMAN FACTORS IN COMPUTING SYSTEMS, ACM, 2 PENN PLAZA, SUITE 701 NEW YORK NY 10121-0701 USA, (20130427), discloses a proof-of-concept system that augments the area surrounding a television with projected visualizations to enhance traditional gaming experiences.

### Summary of the invention

It is a first object of the invention to provide an electronic device, which is operative to provide a signal derived from image content displayed on a display to at least one projector in a manner that makes it easy to achieve different ambient lighting effects.

It is a second object of the invention to provide a method, which provides a signal derived from image content displayed on a display to at least one projector in a manner that makes it easy to achieve different ambient lighting effects.

The first object of the invention is defined by independent claim 1.

First, a surround image is determined from a main image displayed or to be displayed on the display (in case of zooming, only a part of the main image is displayed). Then, a signal is provided to at least one projector. If a signal needs to be provided to only one projector, this signal may comprise the entire surround image. If a signal needs to be provided to a plurality of projectors, each projector may be provided a signal which comprises a part of the surround image, i.e. less than the entire surround image. Although it might be more obvious to implement the mapping of pixels of the main image to pixels in the surround image ("pixel remapping") as a transfer function, using a lookup table will make it possible to easily achieve a different ambient lighting effect by changing to a different lookup table. Examples of effects that can be achieved are a radial zoom pattern suggesting a projection on top of a sphere (a fish-eye alike effect), a radial zoom pattern that breaks up towards the edges, a panoramic zoom pattern, a vertical wave pattern and a random offset pattern. As an additional advantage, use of a lookup table will enable an implementation that requires fewer resources than an implementation that uses a transfer function.

Said position in said main image may correspond to a position on said display, for example. Alternatively, an operation (e.g. zooming) may be performed on said main image before said main image is displayed on said display, for example. In the latter case, the positions in the main image do not correspond to the positions on the display and certain pixels in the main image that may be used to create the surround image are not shown on the display. The lookup table may be the same for several or all inputs (e.g. tuner, HDMI, Internet), input aspect ratios (e.g. 16:9, 21:9) and/or input resolutions (e.g. 1920x1080, 3840x2160) or there may be multiple lookup tables, e.g. chosen in dependence on the resolution and/or aspect ratio of the content displayed or to be displayed on the display.

Said lookup table may be user modifiable. Users may be able to create their own lookup table. For example, an experienced designer thereby gains maximum flexibility to achieve any desired ambient lighting effect.

Said electronic device may further comprise user input means operative to allow a user to modify said lookup table. This allows users to modify the lookup table without any special hardware or software.

Said processor may be operative to use said mapping to determine for each position in said surround image a corresponding position in said main image and a pixel value at said position in said surround image from a pixel value at said corresponding position in said main image. This output-driven filter is the most convenient way of using the lookup table, because it allows positions of the surround image that would not be visible to the user to be skipped.

Said processor may be further operative to determine for each position in said surround image whether said corresponding position in said main image is a valid position in said main image. In this way, the lookup table can also point to areas outside the boundaries of the main image. If the corresponding position in the main image is not a valid position in the main image, it may be clipped to the outermost pixel coordinate or filled with black, for example.

Said processor may be operative to use said mapping to determine for each position in said main image a corresponding position in said surround image and a pixel value at said corresponding position in said surround image from a pixel value at said position in said main image. This input-driven filter is an alternative to the output-driven filter.

Said processor may be further operative to add an offset to said determined position before determining a pixel value at said position in said surround image from a pixel value at said position in said main image. This allows even more different ambient lighting effects to be achieved.

Said mapping may comprise a similar amount of positions for both said surround image and said main image. This allows a straightforward implementation.

Alternatively, said mapping may comprise fewer positions for said surround image than for said main image. This reduces the memory requirements for the lookup table. Experiments have shown that many of the desired effects can be captured in a lookup table of only 32x32 coordinates. Although it is also possible for said mapping to comprise more positions for said surround image than for said main image, this increases memory requirements, which is not desirable.

Said lookup table maps at least one position in said surround image to a plurality of positions in said main image. This allows even more different ambient lighting effects to be achieved.

Said plurality of positions in said main image may be represented by a single value per coordinate, said single value per coordinate representing a contribution value of each of said plurality of positions in said main image, and said processor may be further operative to determine a pixel value at said position in said surround image by interpolating pixels values at said plurality of positions in said main image based on said contribution values. This representation by a single value, e.g. a fraction, limits the additional memory requirements when mapping a position in the surround image to a plurality of positions in the main image.

Said processor may be further operative to obtain a further lookup table, said further lookup table comprising a further mapping between a position in said main image and a position in said surround image, to use said mapping to determine a pixel value of a first position of said surround image from said main image and to use said further mapping to determine a pixel value of a second position of said surround image from said main image. This allows even more different ambient lighting effects to be achieved.

Said electronic device may further comprise said storage means. By storing the lookup table in the electronic device, no additional configuring step is required, e.g. to identify the storage location. Alternatively, the storage means may be located external to the electronic device, e.g. on a network attached storage in a home network, on a USB stick, or on an Internet server.

Said electronic device may further comprise said display. When the electronic device is a display device, e.g. a TV or monitor, no additional configuring step is required, e.g. there is no need to ensure that the electronic device receives the same signal as displayed on the display. When the electronic device is not a display device, the electronic device can advantageously be coupled to a display device with no or less advanced ambient lighting effects and thereby upgrade the features of the display device.

The second object of the invention is defined by independent claim 14.

The third object of the invention is defined by independent claim 15.

### Brief description of the Drawings

These and other aspects of the invention are apparent from and will be further elucidated, by way of example, with reference to the drawings, in which:
Fig.1 is a block diagram of an embodiment of the electronic device ;
Fig.2 illustrates the main image and the surround image;
Fig.3 shows a mapping between a position in a main image and a position in a surround image in a first embodiment of the electronic device;
Fig.4 shows a mapping between a position in a main image and a position in a surround image in a second embodiment of the electronic device;
Fig.5 shows a mapping between a position in a main image and a position in a surround image in a third embodiment of the electronic device;
Fig.6 shows a mapping between a position in a main image and a position in a surround image in a fourth embodiment of the electronic device; and
Fig.7 is a flow diagram of the method of the invention. Corresponding elements in the drawings are denoted by the same reference numeral.

### Detailed description of the Drawings

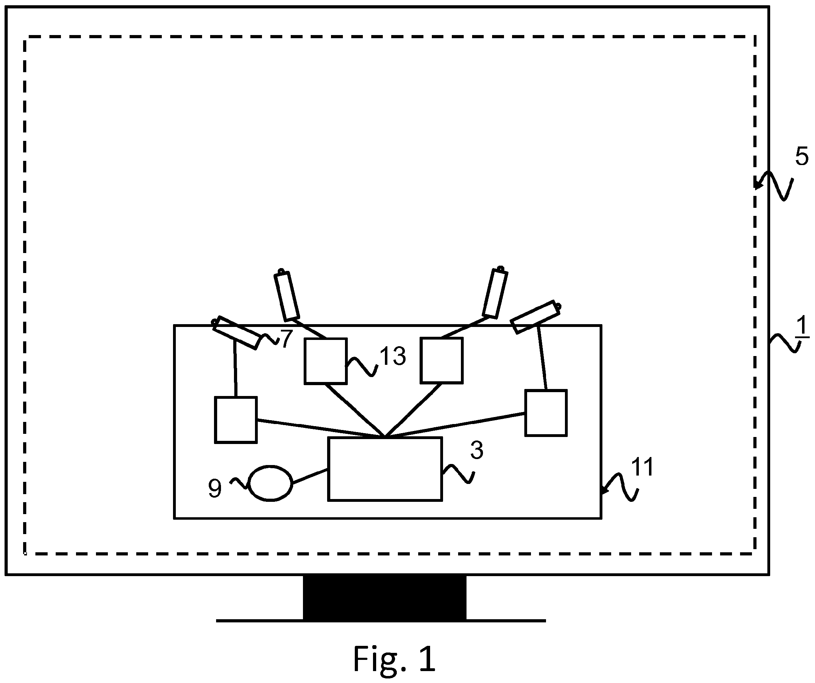

In the embodiment of the electronic device shown in Fig.1 , the electronic device 1 comprises a processor 3 operative to obtain a lookup table from a storage means 9, the lookup table comprising a mapping between a position in a main image and a position in a surround image, to use the mapping to determine the surround image from a main image displayed or to be displayed on a display 5 and to provide a signal to at least one projector 7 for causing the at least one projector 7 to project at least part of the surround image around the display 5.

The electronic device 1 may be a television or a monitor, for example. The projector 7 may be a pico-projector light engine based on e.g. a Texas Instruments .2" nHD, .24" VGA or .3" WVGA DMD and using e.g. OSRAM LED light sources like LE BA Q6WM and LCG H9RM, for example. The display 5 may be an LCD or OLED display panel, for example. The electronic device 1 may be installed on a display device stand (e.g. for a monitor or a TV), for example. Alternatively, the electronic device 1 may be installed on a wall mount, for example. The electronic device 1 may further comprise components typical for a display device such as a television or a monitor, e.g. a power supply, an IR/RF receiver for receiving signals from a remote control, a central processing unit such as a TV SoC (e.g. manufactured by MediaTek or NovaTek), speakers, broadcast and connectivity connectors, e.g. HDMI, USB, coaxial in (for TV signal), coaxial and/or optical out (for audio), one or more wireless transceivers, e.g. WiFi or BlueTooth, one or more slots for a conditional access module, and/or one or more dedicated processors, e.g. for audio and/or video processing.

In this embodiment, the electronic device 1 comprises the storage means 9. The storage means 9 may be a magnetic or optical storage means or a solid state memory, for example. In this embodiment, the display device 1 comprises a printed circuit board 11 which comprises the processor 3 and four light engine controllers 13. The processor 3 may be a suitably programmed Xilinx Spartan-6 LX100 FPGA, for example. Alternatively, the processor 3 may be a general purpose processor, for example. Each of the light engine controllers 13 may comprise a Texas Instruments DLPC2607 DLP Pico processor and a Texas Instruments PAD1000 LED controller, for example.

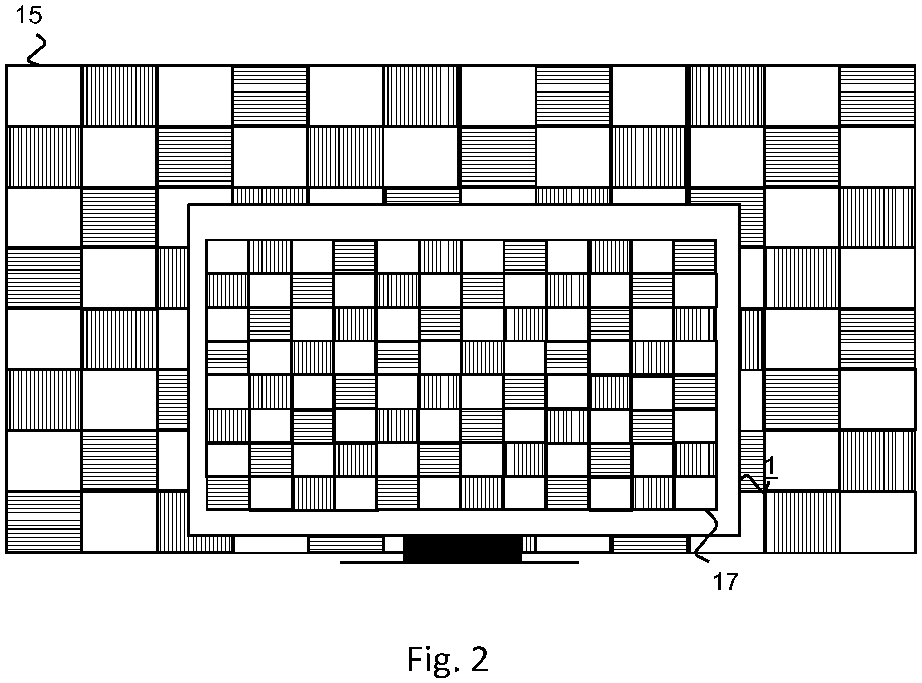

Fig.2 depicts a main image 17 shown on the display of the electronic device 1 and a surround image 15 projected around the electronic device 1. The surround image 1 may be projected by a single projector 7, for example. In this example, the surround image 15 is a simple enlargement of the main image 17. Such an enlargement could also be realized with a transfer function, but is for illustrative purposes only.

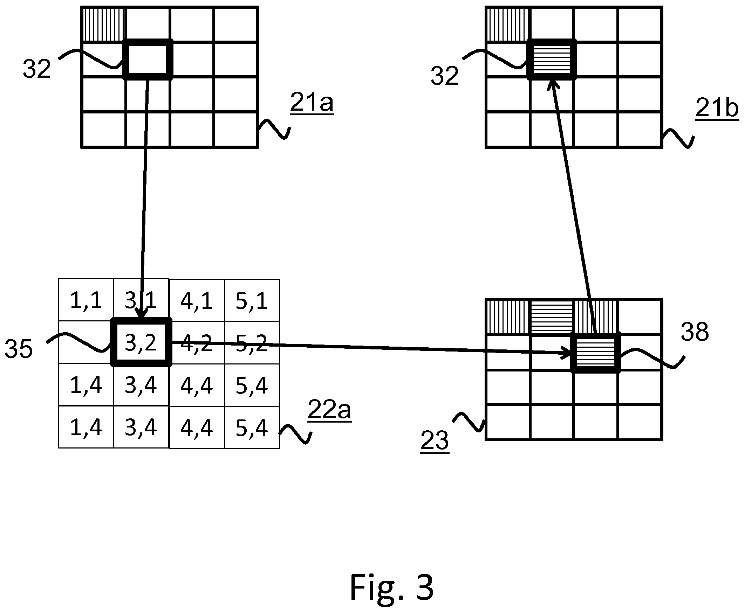

In an embodiment, the processor 3 of the electronic device 1 is operative to use the mapping to determine for each position in the surround image a corresponding position in the main image and a pixel value at the position in the surround image from a pixel value at the corresponding position in the main image, see Fig.3 . So for each output coordinate (x,y) of the target image a corresponding coordinate (x,y) of the input image is obtained from the lookup table. The basic principle of the lookup table is that the real-time processing function for every output image pixel of surround image 21 a reads the RGB pixel value from the main image 23 at the location specified in the lookup table 22a. This RGB pixel value is then applied to the surround image 21 a, which results in surround image 21 b. For example, for output image pixel 32 at coordinate (2,2) in the surround image 21 a, the lookup table value 35 (3,2) is obtained by reading the coordinate (2,2) from the lookup table 22a. Then the coordinate (3,2) is read from the main image 23. The resulting input pixel value 38 is used as value for the output image pixel 32 at coordinate (2,2) in the surround image 21 b. As an alternative to constructing the realtime filter as an output-driven filter as explained in this paragraph, the real-time filter can also be constructed as an input driven filter. Instead of RGB any other colorspace can be used as well.

In an embodiment, the mapping comprises a similar amount of positions for both the surround image and the main image . In the most basic execution, the lookup table used for the remapper function, i.e. the function that determines a surround image from the main image, has the same size as the target image. For example, when this processing stage is done on a 640x360 resolution, then the lookup table would contain 640x360=230400 (x,y) coordinates. Each coordinate identifies a specific pixel of the input image. If in this example the input image would have the same resolution, the x-coordinates in the lookup table need to be able to address 640 input pixels for which at least 10bits are required. For the y-coordinates 9bits would be required. As a consequence this example would require a lookup table of 230400 entries of 19bit per entry.

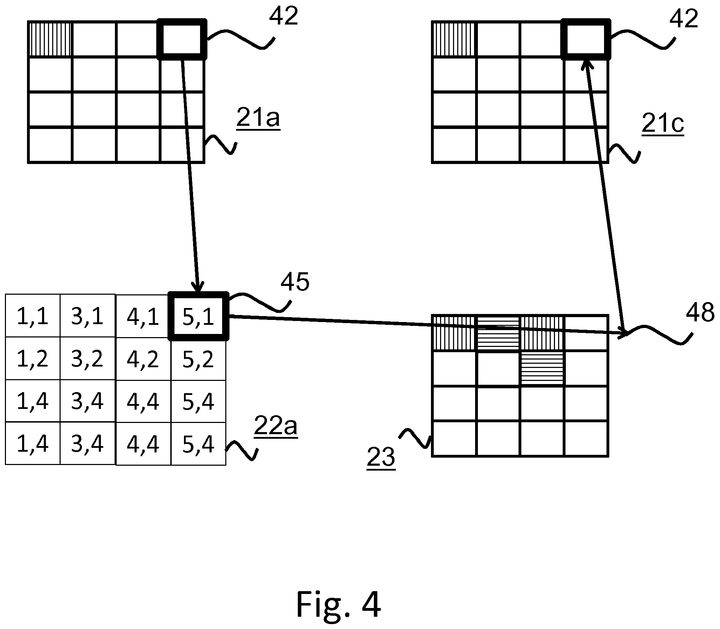

In an embodiment, the processor 3 is further operative to determine for each position in the surround image whether the corresponding position in the main image is a valid position in the main image, see Fig.4 . In a variation on the basic execution, coordinates in the lookup table can point to areas outside the boundaries of the input image. If a coordinate obtained from the lookup table is determined not be a valid coordinate in the main image, it can be clipped to the outer most pixel coordinate or filled with black. For example, for output image pixel 42 at coordinate (4,1) in the surround image 21a, the lookup table value 45 (5,1) is obtained by reading the coordinate (4,1) from the lookup table 22a. As coordinate 48 at (5,1) of main image 23 is determined not be a valid position in main image 23, black is used as value for the output image pixel 42 at (4,1) in the surround image 21c.

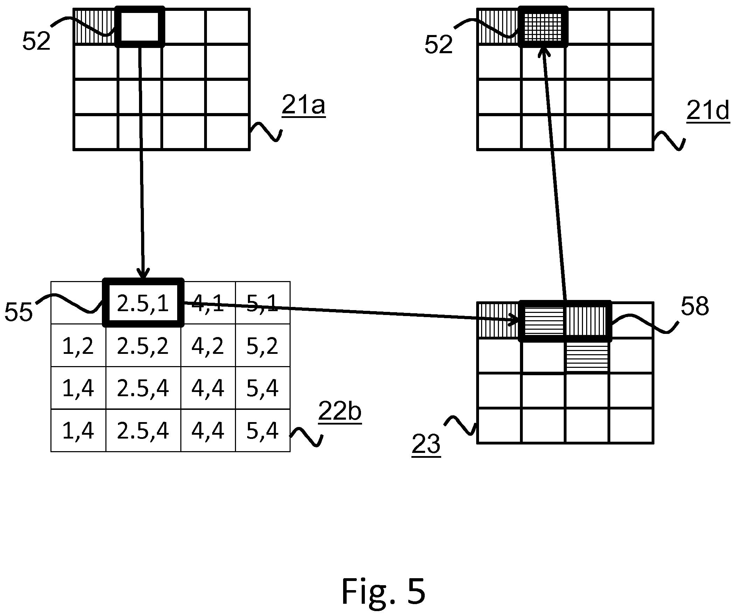

In an embodiment, the lookup table maps at least one position in the surround image to a plurality of positions in the main image , see Fig.5 . In the embodiment of Fig.5 , the plurality of positions in the main image is represented by a single value per coordinate, the single value per coordinate representing a contribution value of each of the plurality of positions in the image source. The processor 3 is further operative to determine a pixel value at the position in the surround image by interpolating pixels values at the plurality of positions in the main image based on the contribution values. For example, in a more advanced execution of the lookup table, a (x,y) coordinate might contain a fractional part so that it cannot only point to an exact pixel of the input image, but also "in between" input image pixels. In this execution, the real-time function handling the lookup table should be able to process the fractional parts in the coordinates. One solution can be to read the four nearest pixels to the position pointed out by the lookup table and combining these into one pixel to be placed in the output image. For example, if the output coordinate(x_out,y_out) = (10,12),this might correspond with input coordinate(x_in,y_in)= (2.1,3.6) according to the table. In this case the algorithm could read the pixel values at locations (2,3), (3,3), (2,4) and(3,4).The contribution value of (2,4) is highest. The contribution value of (3,3) is lowest. The resulting four pixel values could then be interpolated to get one target pixel value for this output coordinate. As another example, for output image pixel 52 at coordinate (2,1) in the surround image 21a, the lookup table value 55 (2.5,1) is obtained by reading the coordinate (2,1) from the lookup table 22b. Then the coordinates (2,1) and (3,1) are read from the main image 23 and interpolated into a single value. The resulting interpolated pixel value 58 is used as value for the output image pixel 52 at coordinate (2,1) in the surround image 21 d. Obviously, more advanced interpolation techniques could require more surrounding input pixels to be read and included in the interpolation scheme.

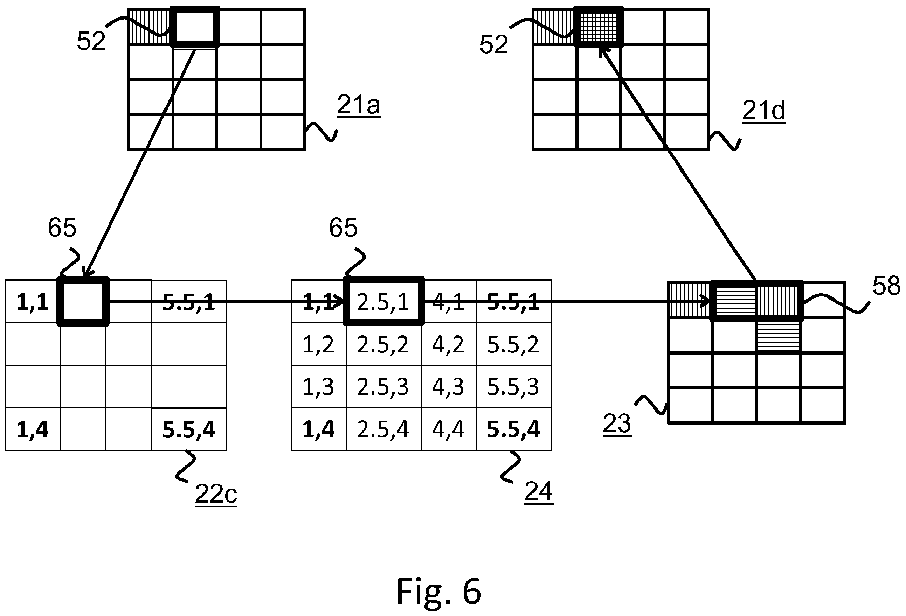

In an embodiment, the mapping comprises fewer positions for the surround image than for the display. Memory requirements for the tables can be reduced by not storing a coordinate per output pixel, but only storing a coordinate for certain output pixels, see Fig.6 . For intermediate output coordinates the input coordinates are constructed by the real-time processing by means of interpolation. For example, for output image pixel 52 at coordinates (2,1) in the surround image 21a, a lookup table value (2.5,1) is determined from the lookup table 22c. Then the coordinates (2,1) and (3,1) are read from the main image 23 and interpolated into a single value. The resulting interpolated pixel value 58 is used as value for the output image pixel 52 at coordinate (2,1) in the surround image 21 d. As the lookup table 22c is only 1/4thof the size of the surround image 21a, the values of the intermediate coordinates need to be interpolated. The values of these intermediate, interpolated coordinates are shown in virtual look up table 24. Only a value for the intermediate coordinate that is required for a certain output pixel, e.g. intermediate coordinate 65 for output pixel 52, needs to be calculated. In Fig.6 , virtual lookup table 24 contains values for all intermediate coordinates. Although this is mainly to illustrate this example, it is possible to calculate multiple intermediate coordinates in advance and store them in random access memory if desired.

Experiments have shown that many of the desired effects can be captured in a lookup table of only 32x32(x,y)coordinates. Again, more advanced interpolation techniques to construct intermediate coordinates from the available data, can lead to a better performance while the lookup table might even be made smaller. The downside of this approach is that the effect designer does not have direct control anymore on each output pixel, but it's expected that for most practical effects this is not an issue. In the end this is finding the balance between memory vs. effect design freedom.

In an embodiment, the processor 3 is further operative to obtain a further lookup table, the further lookup table comprising a further mapping between a position in the main image and a position in the surround image, to use the mapping to determine a pixel value of a first position of the surround image from the main image and to use the further mapping to determine a pixel value of a second position of the surround image from the main image. This enables the real-time processing to include the possibility to interpolate or choose between two (or more) lookup tables, depending on a certain input variable (or a set of variables). This allows real-time "morphing" the remapping (effect) between one execution and another, for example. As an example, the input variable could be a parameter describing the amount of outward oriented motion in the content. In case no motion is detected the remapper could use a table generating a normal content zoom whereas in case of max outward motion the remapper could use a table generating a panoramic zoom. For intermediate motion figures the real-time processing can interpolate between both remapper tables.

In an embodiment, the processor 3 is further operative to add an offset to the determined position before determining a pixel value at the position in the surround image from a pixel value at the position in the main image. This offset may depend on the camera pan direction and speed, for example. If the camera pans to the right (i.e. the content in the scene moves to the left) an offset could be added so that the remapping on the wall contains an extra shift of the content to the left side, for example. This enhances the suggestion of panning. A different modification could be to add a small random offset to each coordinate where the offset is re-randomized every n frames. This makes the wall content a bit noisy which could be considered as a liquid effect. Other real-time modifications of the coordinates stored in the lookup table are also possible.

In an embodiment, the lookup table is user modifiable. The electronic device 1 may further comprise user input means operative to allow a user to modify the lookup table. The user input means may comprise an IR receiver for receiving signals from a remote control, for example. A user interface to modify the lookup table may be shown on the display. Alternatively, the user may be able to use a PC, mobile phone or tablet to modify the lookup table. The lookup table may be stored in the electronic device or outside the electronic device, e.g. on a USB stick, on a network-attached storage (NAS) or on an Internet server.

The lookup table used in the real-time processing can be filled in various ways. Instead of entering all values manually, it is possible to fill the lookup table automatically using well-known remapping functions (e.g. similar to the ones used for upscaling 4:3 content to screen-filling 16:9 content by means of a horizontal "panoramic" stretch). It is also possible to fill the lookup table using a function that emphasizes the actual semi-circular shape of the halo, i.e. using a radial remapping function. In fact, any custom defined function can be used. Afterwards, the values of the automatically filled lookup table can be manually modified.

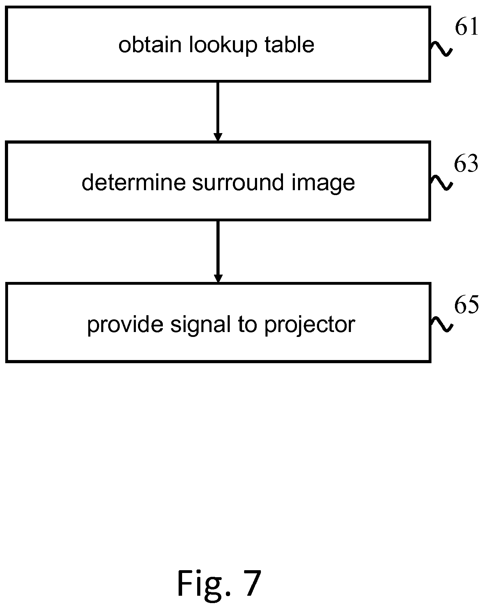

In an embodiment, the method of providing a signal to at least one projector comprises three steps, see Fig. 7 . A step 61 comprises obtaining a lookup table from a storage means, the lookup table comprising a mapping between a position in a main image and a position in a surround image. A step 63 comprises using the mapping to determine the surround image from a main image displayed or to be displayed on a display. A step 65 comprises providing a signal to at least one projector for causing the at least one projector to project at least part of the surround image around the display. The method of the invention may be performed by a processor of a device for providing a signal to at least one projector and/or by software (for) running on a processor of a programmable device.

Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage. 'Software' and "Computer Program Product" are to be understood to mean any software product stored on a computerreadable medium, such as a floppy disk, downloadable via a network, such as the Internet, or marketable in any other manner.

## Claims

1. An electronic device (1) for providing a signal to at least one projector (7), comprising a processor (3) operative
to obtain a lookup table from a storage means (9), said lookup table comprising a mapping between positions in a main image (17) displayed or to be displayed on a display (5) and positions in a surround image (15) that is to be projected at least partly by said at least one projector (7) around said display (5),
to determine said surround image (15) from said main image (17) in real time, based on pixel values of said main image (17) and corresponding positions in said main image (17) and in said surround image (15) as specified in the mapping, and
to provide said signal derived from said surround image (15) to said at least one projector (7) for causing said at least one projector (7) to project at least part of said surround image (15) around said display (5).

2. An electronic device (1) as claimed in claim 1, wherein said lookup table is user modifiable.

3. An electronic device (1) as claimed in claim 2, further comprising user input means operative to allow a user to modify said lookup table.

4. An electronic device (1) as claimed in any of the preceding
claims, wherein said processor (3) is operative to determine said surround image (15) by obtaining, for
each position in said surround image (15), at least one corresponding
position in said main image (17) based on said mapping, and by using pixel values
at said at least one corresponding position in said main image (17) to determine a pixel value at said position in said surround image (15).

5. An electronic device (1) as claimed in claim 4, wherein said processor (3) is further operative to determine for each position in said surround image (15) whether said at least one corresponding position in said main image (17) is a valid position in said main image (17) .

6. An electronic device (1) as claimed in any of claims 1 to 3,
wherein said processor (3) is operative to determine said surround image (15) by obtaining, for
each position in said main image (17), a corresponding position in
said surround image (15) based on said mapping, and by using a pixel value at said position in said main image (17) as a pixel value at said corresponding position in said surround image (15).

7. An electronic device (1) as claimed in any of claims 4 to 5, wherein said processor (3) is further operative to add an offset to said at least one corresponding position in said main image (17) before using the pixel values at said at least one corresponding position in said main image (17) to determine the pixel value at said position in said surround image (15).

8. An electronic device (1) as claimed in any of the preceding claims, wherein said lookup table has the same size as said surround image (15)

9. An electronic device (1) as claimed in any of claims 1 to 7, wherein said lookup table is smaller than said surround image (15).

10. An electronic device (1) as claimed in any of the claims 1 to 5 or 7 to 9, wherein said mapping is configured to map at least one position in said surround image (15) to a plurality of corresponding positions in said main image (17).

11. An electronic device (1) as claimed in claim 10, wherein said plurality of corresponding positions in said main image (17) is represented by a single fractional value per coordinate in the lookup table, said single fractional value per coordinate representing a contribution value of each of said plurality of corresponding positions in said main image (17), and wherein said processor (3) is further operative to determine said surround image (15) by calculating a pixel value at said at least one position in said surround image (15) by interpolating pixels values at said plurality of corresponding positions in said main image (17) based on said contribution values.

12. An electronic device (1) as claimed in any of the preceding claims, wherein said processor (3) is further operative to obtain a further lookup table, said further lookup table comprising a further mapping between positions in said main image (17) and positions in said surround image (15), to determine a pixel value of a first position in said surround image (15) from a pixel value of a first corresponding position in said main image (17) based on said mapping, and to determine a pixel value of a second position in said surround image (15) from a pixel value of a second corresponding position in said main image (17) based on said further mapping.

13. An electronic device (1) as claimed in any of the preceding claims, further comprising said display (5).

14. A method of operating an electronic device (1) for providing a signal to at least one projector (7), comprising the steps of: obtaining (61) a lookup table from a storage means (9), said lookup table comprising a mapping between positions in a main image (17) displayed or to be displayed on a display (5) and positions in a surround image (15) that is to be projected at least partly by said at least one projector (7) around said display (5); determining (63) said surround image (15) from said main image (17) in real time, based on pixel values of said main image (17) and corresponding positions in said main image (17) and in said surround image (15) as specified in the mapping; and providing (65) said signal derived from said surround image (15) to said at least one projector (7) for causing said at least one projector (7) to project at least part of said surround image (15) around said display (5).

15. A computer-readable program product comprising computer program code means to cause the processor (3) in the electronic device (1) of claim 1 to perform the method of claim 14.

## Patentansprüche

1. Elektronisches Gerät (1) zur Übertragung eines Signals an mindestens einen Projektor (7), umfassend:
einen Prozessor (3), der dazu dient, eine Wertetabelle aus einem Speichermedium (9) abzurufen, wobei die Wertetabelle ein Mapping zwischen Positionen in einem Hauptbild (17) enthält, das auf einem Bildschirm (5) angezeigt wird oder werden soll, und Positionen in einem Umgebungsbild (15), das zumindest teilweise von dem mindestens einen Projektor (7) um den Bildschirm (5) herum projiziert werden soll,
um das Umgebungsbild (15) auf der Basis der Pixelwerte des Hauptbildes (17) und entsprechender Positionen in dem Hauptbild (17) und in dem Umgebungsbild (15) gemäß der Spezifikation in dem Mapping in Echtzeit anhand des Hauptbildes (17) zu bestimmen, und
um das von dem Umgebungsbild (15) stammende Signal an den mindestens einen Projektor (7) zu übertragen, um zu bewirken, dass der mindestens eine Projektor (7) zumindest einen Teil des Umgebungsbildes (15) um den Bildschirm (5) herum projiziert.

2. Elektronisches Gerät (1) nach Anspruch 1, wobei die Wertetabelle von Benutzer änderbar ist.

3. Elektronisches Gerät (1) nach Anspruch 2, zudem umfassend eine Eingabevorrichtung, die es einem Benutzer ermöglicht, die Wertetabelle zu ändern.

4. Elektronisches Gerät (1) nach einem der vorstehenden Ansprüche, wobei der Prozessor (3) in der Lage ist, das Umgebungsbild (15) zu bestimmen, indem er für jede Position in dem Umgebungsbild (15) anhand des Mapping mindestens eine entsprechende Position in dem Hauptbild (17) abruft und indem er Pixelwerte an der mindestens einen entsprechenden Position in dem Hauptbild (17) verwendet, um einen Pixelwert an dieser Position in dem Umgebungsbild (15) zu bestimmen.

5. Elektronisches Gerät (1) nach Anspruch 4, wobei der Prozessor (3) zudem in der Lage ist, für jede Position in dem Umgebungsbild (15) zu bestimmen, ob die mindestens eine entsprechende Position in dem Hauptbild (17) eine gültige Position in dem Hauptbild (17) ist.

6. Elektronisches Gerät (1) nach einem der Ansprüche 1 bis 3, wobei der Prozessor (3) in der Lage ist, das Umgebungsbild (15) zu bestimmen, indem er für jede Position in dem Hauptbild (17) anhand des Mapping eine entsprechende Position in dem Umgebungsbild (15) bestimmt und indem er einen Pixelwert an dieser Position in dem Hauptbild (17) als einen Pixelwert an der entsprechenden Position in dem Umgebungsbild (15) verwendet.

7. Elektronisches Gerät (1) nach einem der Ansprüche 4 bis 5, wobei der Prozessor (3) zudem in der Lage ist, zu der mindestens einen entsprechenden Position in dem Hauptbild (17) einen Offset hinzuzufügen, bevor er die Pixelwerte an der mindestens eine entsprechende Position in dem Hauptbild (17) verwendet, um die Pixelwerte an dieser Position in dem Umgebungsbild (15) zu bestimmen.

8. Elektronisches Gerät (1) nach einem der vorstehenden Ansprüche, wobei die Wertetabelle dieselbe Größe aufweist wie das Umgebungsbild (15).

9. Elektronisches Gerät (1) nach einem der Ansprüche 1 bis 7, wobei die Wertetabelle kleiner ist als das Umgebungsbild (15).

10. Elektronisches Gerät (1) nach einem der Ansprüche 1 bis 5 oder 7 bis 9, wobei das Mapping so konfiguriert ist, dass es mindestens eine Position in dem Umgebungsbild (15) einer Vielzahl entsprechender Positionen in dem Hauptbild (17) zuordnet.

11. Elektronisches Gerät (1) nach Anspruch 10, wobei die Vielzahl entsprechender Positionen in dem Hauptbild (17) durch einen einzigen Bruchwert je Koordinate in der Wertetabelle dargestellt wird und der einzige Bruchwert je Koordinate einen Beitragswert jeder der Vielzahl entsprechender Positionen in dem Hauptbild (17) darstellt, wobei der Prozessor (3) zudem in der Lage ist, das Umgebungsbild (15) zu bestimmen, indem er mittels Interpolieren der Pixelwerte an der Vielzahl entsprechender Positionen in dem Hauptbild (17) auf der Basis der Beitragswerte einen Pixelwert an der mindestens einen Position in dem Umgebungsbild (15) berechnet.

12. Elektronisches Gerät (1) nach einem der vorstehenden Ansprüche, wobei der Prozessor (3) zudem in der Lage ist, eine weitere Wertetabelle abzurufen, wobei die weitere Wertetabelle ein weiteres Mapping zwischen Positionen in dem Hauptbild (17) und Positionen in dem Umgebungsbild (15) enthält, um anhand eines Pixelwertes einer ersten entsprechenden Position in dem Hauptbild (17) auf der Basis des Mapping einen Pixelwert einer ersten Position in dem Umgebungsbild (15) zu bestimmen und um anhand eines Pixelwertes einer zweiten entsprechenden Position in dem Hauptbild (17) auf der Basis des weiteren Mapping einen Pixelwert einer zweiten Position in dem Umgebungsbild (15) zu bestimmen.

13. Elektronisches Gerät (1) nach einem der vorstehenden Ansprüche, wobei das elektronische Gerät (1) zudem den Bildschirm (5) umfasst.

14. Verfahren zum Betrieb eines elektronischen Geräts (1) zur Übertragung eines Signals an mindestens einen Projektor (7), wobei das Verfahren folgende Schritte umfasst:
Abrufen (61) einer Wertetabelle aus einem Speichermedium (9), wobei die Wertetabelle ein Mapping zwischen Positionen in einem Hauptbild (17) enthält, das auf einem Bildschirm (5) angezeigt wird oder werden soll, und
Positionen in einem Umgebungsbild (15), das zumindest teilweise von dem mindestens einen Projektor (7) um den Bildschirm (5) herum projiziert werden soll;
Bestimmen (63) des Umgebungsbildes (15) anhand des Hauptbildes (17) in Echtzeit auf der Basis der Pixelwerte des Hauptbildes (17) und entsprechender Positionen in dem Hauptbild (17) und in dem Umgebungsbild (15) gemäß der Spezifikation in dem Mapping; und
Übertragen (65) des von dem Umgebungsbild (15) stammenden Signals an den mindestens einen Projektor (7), um zu bewirken, dass der mindestens eine Projektor (7) zumindest einen Teil des Umgebungsbildes (15) um den Bildschirm (5) herum projiziert.

15. Computerlesbares Programmprodukt, umfassend Computerprogrammcodemittel, um zu bewirken, dass der Prozessor (3) in dem elektronischen Gerät (1) nach Anspruch 1 das Verfahren nach Anspruch 14 ausführt.

## Revendications

1. Dispositif électronique (1) pour fournir un signal à au moins un projecteur (7) comprenant:
un processeur (3) fonctionnant pour obtenir une table de mise à jour à partir d'un moyen de stockage (9), cette table de mise à jour comprenant une cartographie entre les positions dans une image principale (17) affichée ou
qui doit être affichée sur un affichage (5) et les positions dans l'image d'entourage (15) qui doit être projeté au moins en partie par au moins ce projecteur (7) autour de l'affichage (5),
pour déterminer l'image d'entourage (15) à partir de l'image principale (17) en temps réel, en se fondant sur les valeurs de pixel de cette image principale (17) et
correspondant aux positions dans l'image principale (17) et dans l'image d'entourage (15) comme indiqué dans la cartographie, et
pour fournir ce signal dérivé de l'image d'entourage (15) à au moins un projecteur (7) pour que ce projecteur (7) projette au moins en partie l'image d'entourage (15) autour de l'affichage (5).

2. Dispositif électronique (1) selon la revendication 1, dans lequel la table de mise à jour peut être modifiée par l'utilisateur.

3. Dispositif électronique (1) selon la revendication 2, comprenant en outre: un moyen d'entrée d'utilisateur fonctionnant pour permettre à l'utilisateur de modifier la table de mise à jour.

4. Dispositif électronique (1) selon l'une quelconque des revendications précédentes, dans lequel le processeur (3) fonctionne pour déterminer l'image d'entourage (15) en obtenant pour chaque position dans l'image d'entourage (15), au moins une position correspondante dans l'image principale (17) en se fondant sur la cartographie en utilisant des valeurs de pixel au moins à cette position correspondante de l'image principale (17) pour déterminer une valeur de pixel à cette position dans l'image d'entourage (15).

5. Dispositif électronique (1) selon la revendication 4, dans lequel le processeur (3) fonctionne en outre pour déterminer chaque position dans l'image d'entourage (15), pour savoir si cette position correspondante dans l'image principale (17) est une position valide dans l'image principale (17).

6. Dispositif électronique (1) selon l'une quelconque des revendications 1 à 3, dans lequel le processeur (3) fonctionne pour déterminer l'image d'entourage (15) en obtenant pour chaque position dans l'image principale (17), une position correspondante dans l'image d'entourage (15) fondée sur la cartographie et en utilisant une valeur de pixel à la position dans cette image principale (17) comme valeur de pixel à la position correspondante dans l'image d'entourage (15).

7. Dispositif électronique (1) selon l'une quelconque des revendications 4 à 5, dans lequel le processeur (3) fonctionne en outre pour ajouter un décalage à au moins cette position correspondante dans l'image principale (17) avant d'utiliser les valeurs de pixel à au moins une position correspondante dans l'image principale (17) pour déterminer la valeur de pixel à cette position dans l'image d'entourage (15).

8. Dispositif électronique (1) selon l'une quelconque des revendications précédentes, dans lequel la table de mise à jour a la même taille que l'image d'entourage (15).

9. Dispositif électronique (1) selon l'une quelconque des revendications 1 à 7, dans lequel la table de mise à jour est plus petite que la table d'entourage (15).

10. Dispositif électronique (1) selon l'une quelconque des revendications 1 à 5 ou 7 à 9, dans lequel la cartographie est configurée pour cartographier au moins une position dans l'image d'entourage (15) pour un ensemble de positions correspondantes dans l'image principale (17).

11. Dispositif électronique (1) selon la revendication 10, dans lequel cet ensemble de positions correspondantes dans l'image principale (17) est représenté par une unique valeur fractionnaire par coordonnée dans la table de mise à jour, cette unique valeur fractionnelle par coordonnée représentant une valeur de contribution pour chacune des positions de l'ensemble des positions correspondantes dans cette image principale (17), et dans lequel le processeur (3) fonctionne en outre pour déterminer cette image d'entourage (15) en calculant une valeur de pixel à au moins une position dans l'image d'entourage (15) par interpolation des valeurs de pixels de cet ensemble de positions correspondantes dans cette image principale (17) en se fondant sur ces valeurs de contribution.

12. Dispositif électronique (1) selon l'une quelconque des revendications précédentes, dans lequel le processeur (3) fonctionne en outre pour obtenir une autre table de mise à jour, cette autre table de mise à jour comprenant une autre cartographie entre les positions de cette image principale (17) et les positions dans l'image d'entourage (15) pour déterminer une valeur de pixel d'une première position dans l'image d'entourage (15) à partir d'une valeur de pixel d'une première position correspondante dans cette image principale (17) en se fondant sur la cartographie, et pour déterminer une valeur de pixel d'une seconde position dans cette image d'entourage (15) à partir d'une valeur de pixel d'une seconde position correspondante dans l'image principale (17) fondée sur cette autre cartographie.

13. Dispositif électronique (1) selon l'une quelconque des revendications précédentes, comprenant en outre un affichage (5).

14. Procédé de fonctionnement d'un dispositif électronique (1) pour fournir un signal à au moins un projecteur (7) comprenant les étapes consistant à:
obtenir (61) une table de mise à jour à partir d'un moyen de stockage (9), cette table de mise à jour comprenant une cartographie entre les positions dans l'image principale (17) affichées ou qui doivent être affichées sur l'affichage (5) et les positions dans l'image d'entourage (15) qui doivent être projetées au moins en partie par au moins un projecteur (7) autour de l'affichage (5),
déterminer (63) l'image d'entourage (15) à partir de l'image principale (17) en temps réel en se fondant sur les valeurs de pixel de l'image principale (17) et les positions correspondantes dans cette image principale (17) et dans l'image d'entourage (15) comme indiqué dans la cartographie, et
fournir (65) le signal dérivé de cette image d'entourage (15) à au moins un projecteur (7) pour qu'il projette au moins en partie cette image d'entourage (15) autour de l'affichage (5).

15. Programme lisible par un ordinateur comprenant un code-programme d'ordinateur pour que le processeur (3) du dispositif électronique (1) de la revendication 1 exécute le procédé de la revendication 14.
